# EUROPEAN PATENT APPLICATION

(11) **EP 2 848 474 A1**
(43) Date of publication of application: **18.03.2015**
(21) Application number: 14178222.7
(22) Date of filing: 23.07.2014
(51) Int. Cl.: B60R 13/00

(54) **Vehicular exterior member**

(30) Priority: 13.09.2013 JP 2013190107
(71) Applicant: Toyoda Gosei Co., Ltd., Kiyosu-shi Aichi 452-8564 (JP)
(72) Inventor: Sugiuira, Tatsuya, Kiyosu-shi, Aichi 452-8564 (JP); Maeda, Hideto, Kiyosu-shi, Aichi 452-8564 (JP); Horibe, Hitoshi, Kiyosu-shi, Aichi 452-8564 (JP); Kawashima, Daiichiro, Kiyosu-shi, Aichi 452-8564 (JP)
(74) Representative: Kramer Barske Schmidtchen Patentanwälte PartG mbB

(57) **Abstract**

Provided is a vehicular exterior member having excellent productivity while enhancing weather resistance. An exterior body (2) in a vehicular exterior member (1) is formed of a transparent resin material, a concave portion (20) is provided in a portion of the rear surface of the exterior body, and a designed body (3) which is smaller than the exterior body (2) in size is disposed inside the concave portion (20) in the exterior body (2). The designed body (3) includes a transparent layer (30) and a decorative layer (31) and is fixed to the inside of the concave portion (20) through an adhesive layer (4) while the transparent layer 30 faces the exterior body (2).

## Description

### BACKGROUND OF THE INVENTION

### 1. Field of the Invention

The present invention relates to an exterior member disposed in a vehicle.

### 2. Description of the Related Art

As vehicular exterior members represented by a front grille, a back door garnish, and the like, various members have been hitherto known. Among the vehicular exterior members, there is a member in which various types of designed bodies are integrated into a base body (called an exterior body). As the designed body, for example, there is an emblem.

The designed body has a decorative layer which displays a predetermined design. The decorative layer is composed of metal, paint, a resin material, or the like and displays the design using color differences and uneven shapes. The decorative layer is generally covered with a transparent layer made of a transparent resin material. The design of the decorative layer is displayed to the outside through the transparent layer. Furthermore, the decorative layer covered with the transparent layer is less likely to be directly exposed to sunlight, rainwater, or the like and is thus less likely to deteriorate. That is, the transparent layer contributes to the weather resistance of the designed body. In general, the exterior body is an exterior member of a vehicle and is thus colored, and the designed body is fixed to the surface side of the exterior body while the transparent layer faces the surface side.

However, although the surface side of the designed body is covered with the transparent layer, the designed body is fixed to the surface of the exterior body. Therefore, the boundary portion between the designed body and the exterior body is still exposed to the outside. Accordingly, there is a possibility that rainwater or the like that infiltrates into the rear side of the designed body from the boundary portion may reach the decorative layer.

A technique is suggested in which at least a portion of an exterior body is composed of a transparent resin material and a decorative layer is directly formed on the rear surface side of the transparent exterior body (for example, refer to JP 2012-112660 A). In this case, there is an advantage that the decorative layer is less likely to be exposed to the outside. On the other hand, in order to manufacture this type of vehicular exterior member, the entire exterior body which is a relatively large member needs to be handled during the formation of the decorative layer, resulting in the degradation in workability.

For example, in a case where the decorative layer is formed through vapor deposition method, the entire exterior body needs to be put in a vacuum chamber for the vapor deposition method, and thus a very large vacuum chamber is needed to manufacture a single vehicular exterior member. Therefore, it takes a long time to manufacture the single vehicular exterior member. That is, this type of existing vehicular exterior member has a problem in that it is difficult to allow weather resistance and productivity to be compatible with each other.

The present invention provides a vehicular exterior member having excellent productivity while enhancing weather resistance.

### SUMMARY OF THE INVENTION

In order to solve the above problems, a vehicular exterior member of the present invention includes: an exterior body which is made of a transparent resin material; and a designed body which is smaller than the exterior body in size and is integrated into the exterior body, wherein the exterior body includes a display portion so that the designed body is fixed to a rear surface side of the display portion, a concave portion is provided on the rear surface side of the display portion, the designed body includes a transparent layer made of a transparent resin material and a decorative layer provided on a rear surface side of the transparent layer, the designed body is disposed inside the concave portion while the transparent layer faces the exterior body side, and an adhesive layer made of a transparent adhesive material is interposed between the transparent layer of the designed body and the exterior body.

The vehicular exterior member of the present invention may be provided with any one of (1) to (4) as below or may be provided with a plurality thereof.
(1) The designed body has a constant thickness.
(2) The vehicular exterior member includes a first area and a second area, a crossing angle with respect to a vertical direction when the vehicular exterior member is attached to a vehicle is greater in the first area than in the second area, the display portion is provided over a portion of the first area and a portion of the second area, and a thickness of the display portion is greater in the second area than in the first area.
(3) The designed body is a millimeter wave transmission cover which is disposed in a front of a millimeter wave radar device for a vehicle, and relative permittivities of the transparent resin material forming the exterior body, the transparent resin material forming the transparent layer of the designed body, and the adhesive layer are 2.7 ± 1.5 at 76.5 GHz at room temperature.
(4) The crossing angle with respect to the vertical direction when the vehicular exterior member is attached to the vehicle is equal to or greater than 30° and equal to or smaller than 90° in the first area and is equal to or greater than 0° and smaller than 30° in the second area. Advantageous Effects of Invention

In the vehicular exterior member of the present invention, the concave portion is provided on the rear surface side of the transparent exterior body, and the designed body is disposed inside the concave portion. Since the designed body is disposed on the rear surface side of the exterior body, the designed body is less likely to be exposed to the outside, and thus the designability and/or the functionality thereof is less likely to deteriorate. In addition, since the designed body provided with the decorative layer is smaller than the exterior body in size, productivity is also enhanced. Therefore, according to the vehicular exterior member of the present invention, weather resistance and productivity are compatible with each other.

In addition, as long as the shape of the concave portion is standardized, the same designed body can be shared by exterior bodies having various shapes, and thus there is an advantage that productivity is further enhanced.

Furthermore, the decorative layer of the designed body and the external environment are separated from each other by the transparent exterior body, the transparent adhesive layer, and the transparent layer of the designed body. That is, the decorative layer of the designed body is displayed to the outside through the transparent thick layer (the exterior body, the adhesive layer, and the transparent layer). Therefore, according to the vehicular exterior member of the present invention, a distinctive design having a sense of depth can be displayed.

### BRIEF DESCRIPTION OF THE DRAWINGS

FIG. 1 is a perspective view schematically illustrating a vehicle in which a vehicular exterior member of an embodiment is disposed;
FIG. 2 is a front view schematically illustrating the vehicular exterior member of the embodiment;
FIG. 3 is a cross-sectional view schematically illustrating a state in which the vehicular exterior member of the embodiment is cut in the thickness direction and the vertical direction; and
FIG. 4 is an explanatory view illustrating a "crossing angle" in the vehicular exterior member of the embodiment.

### DETAILED DESCRIPTION OF THE PREFERRED EMBODIMENTS

Hereinafter, a vehicular exterior member of the present invention will be described in detail.

In the vehicular exterior member of the present invention, a transparent resin material forming an exterior body and a transparent resin material forming a designed body (transparent layer) may be the same or may be different from each other. In order to improve a sense of unity with the transparent thick layers (that is, the exterior body, an adhesive layer, and the transparent layer) described above so as to enhance designability, the transparent resin materials thereof may have the same degree of transparency, and the exterior body and the transparent layer may be formed of the same type of transparent resin material. In consideration of performances needed for the vehicular exterior member, such as weather resistance, as the transparent resin material, at least one type selected from polymethylmethacrylate resin (PMMA), polycarbonate (PC), polystyrene (PS), and polyethylene terephthalate (PET) may be selected.

A transparent adhesive material may be a material that can adhere to the exterior body and the transparent layer and is transparent, and the type thereof is not particularly limited. For example, as the transparent adhesive material, at least one type selected from various types of urethane based adhesives and various types of acrylic based adhesives may be exemplified. The thickness of the adhesive layer formed from the transparent adhesive material is not particularly limited but may be generally 100 µm to 500 µm, and is smaller than those of the exterior body and the transparent layer.

The designed body may simply display a design similarly to the emblem described above. Otherwise, the designed body may have a certain function such as a radio wave transmission cover, which will be described later. In any case, the designed body composes a portion of the vehicular exterior member and thus may have excellent weather resistance. For example, by further covering the rear surface side of a decorative layer in the designed body with a liner layer, the weather resistance of the designed body may be enhanced. The liner layer may be transparent or may be colored. Further, the liner layer may cover not only the rear surface side of the designed body but also the rear surface side of the exterior body. That is, the rear surface side of the designed body of the present invention in which the designed body is adhered to the exterior body may further be covered with a single liner layer. The liner layer may be molded separately from the vehicular exterior member and be integrated through methods such as adhesion, welding, or fitting. Otherwise, the liner layer may be molded integrally with the vehicular exterior member through an insert resin molding method or the like. In the case where the vehicular exterior member and the liner layer are integrally molded, a second liner layer may be provided in advance on the rear surface side of the decorative layer in the designed body. The second liner layer may be made of the same type of resin material as the liner layer described above, or may be made of a resin material having a higher melting point than that of the liner layer described above so as to protect the decorative layer with high reliability during the resin molding.

At least a portion of the designed body and/or at least a portion of the exterior body may be made of only a transparent resin material. In this case, for example, a function as a lens portion in a luminous ornament may be imparted to a transparent designed body and a transparent exterior body. The luminous ornament is a device that includes a luminous body (for example, an LED light) as a light source and the lens portion which transmits light emitted by the luminous body, and allows a design corresponding to the shape of the lens portion to glow so as to be displayed. In this case, the corresponding design to the three-dimensional shape of the designed body and/or the exterior body may be allowed to glow so as to be displayed. In this case, the designed body and the decorative layer need to be formed of a transparent resin material. In addition, the decorative layer needs to be provided with a predetermined uneven surface for allowing the design to glow so as to be displayed. The uneven surface needs to be adjacent to a second decorative layer made of a material having a different refractive index from that of the decorative layer. The second decorative layer may be, for example, an air layer. Otherwise, an uneven surface that is complementary to the uneven surface of the decorative layer may be provided in the transparent layer so as to use the transparent layer as the second decorative layer. In the case of the use as the lens portion, the materials of the designed body and the exterior body may use at least one type selected from PMMA, PC, PS, and PET.

In addition, as described above, the designed body may be used as the radio wave transmission cover. The radio wave transmission cover is one of members for adaptive cruise control (ACC). The ACC is a technique of measuring the distance and relative speed between a vehicle and a vehicle in front using a sensor mounted in the front of the vehicle and controlling the throttles and brakes on the basis of the information to accelerate or decelerate the vehicle, thereby controlling the distance between the vehicles. The ACC has received attention as one of core technologies of the intelligent transportation system (ITS) which is aimed at reducing traffic congestion and accidents. As the sensor of the ACC, a laser radar or a millimeter wave radar is generally used. A millimeter wave is a radio wave having a frequency of 30 GHz to 300 GHz and a wavelength of 1 to 10 mm. The millimeter wave radar transmits a millimeter wave and receives the millimeter wave reflected from an object. In addition, the distance or relative speed between the vehicle and the vehicle in front is measured from the difference between the transmitted wave and the received wave.

A vehicular radio wave radar device is generally disposed in the rear of an exterior member represented by a front grille. Therefore, in this case, a part of the front grille which is located in the front of the vehicular radio wave radar device needs to be composed of a cover (radio wave transmission cover) that can transmit radio waves. This is because a general front grille is subjected to uneven shapes or metal plating for the purpose of displaying a three-dimensional design.

In the case where the designed body is used in the radio wave transmission cover, a material that can transmit radio waves needs to be selected as the material of the decorative layer. For example, the material may include a resin material, various types of paint, and metals (for example, indium and gold) deposited in island shapes.

Furthermore, in the case where the designed body is used in the radio wave transmission cover, the transparent layer that composes the designed body may be made of a resin material having a low dielectric loss tangent. When the dielectric loss tangent is small, radio waves such as millimeter waves are less likely to be converted into thermal energy, and thus attenuation in radio waves can be suppressed. In addition, in the case where the second liner layer described above is provided in the designed body, the second liner layer as well as the transparent layer may be made of a material having a low dielectric loss tangent. Furthermore, in this case, the transparent resin material and the transparent adhesive material forming the exterior body may also be made of a material having a low dielectric loss tangent. As a transparent resin material having a low dielectric loss tangent, PMMA and PC are exemplified. As a transparent adhesive material having a low dielectric loss tangent, acrylic based adhesives are exemplified. As a colored resin material having a low dielectric loss tangent, acrylonitrile ethylene styrene (AES), acrylonitrile butadiene styrene (ABS), and PC are exemplified. The colored resin material having a low dielectric loss tangent may be used for the liner layer, the second liner layer, and the like.

Furthermore, in this case, the relative permittivities of at least the transparent resin material forming the exterior body, the transparent resin material forming the designed body, and the transparent adhesive material may be substantially the same. Specifically, the relative permittivities thereof may be 2.7 ± 1.5 at 76.5 GHz and at room temperature. In the case where the above-described liner layer is integrated, as the resin material forming the liner layer, a material having a permittivity in the above range may be used.

In the vehicular exterior member of the present invention, the thickness of the designed body may be constant. This is because the overall thickness of the vehicular exterior member is easily controlled as described later. The constant thickness of the designed body mentioned here is a concept that includes a substantially constant thickness. Specifically, when the maximum thickness of the designed body is 100%, variations of -5% are permitted.

Hereinafter, the vehicular exterior member of the present invention will be described based on Example.

### (Embodiment)

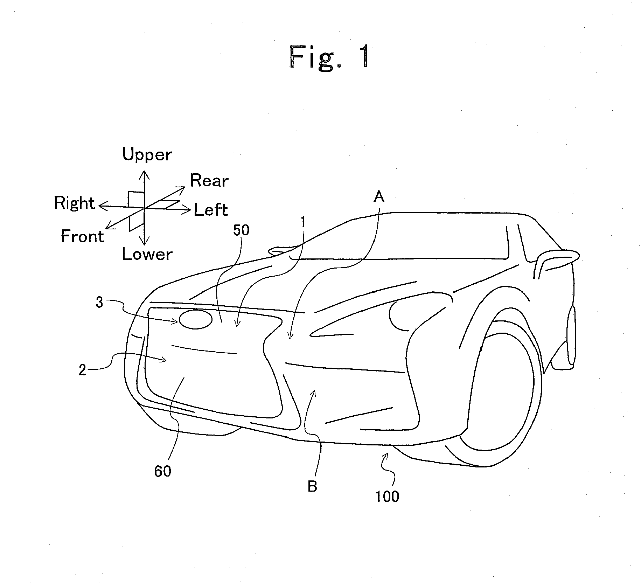

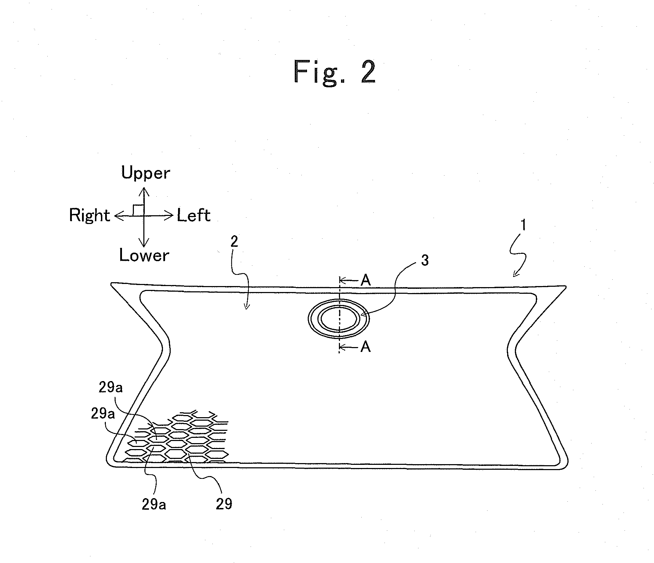

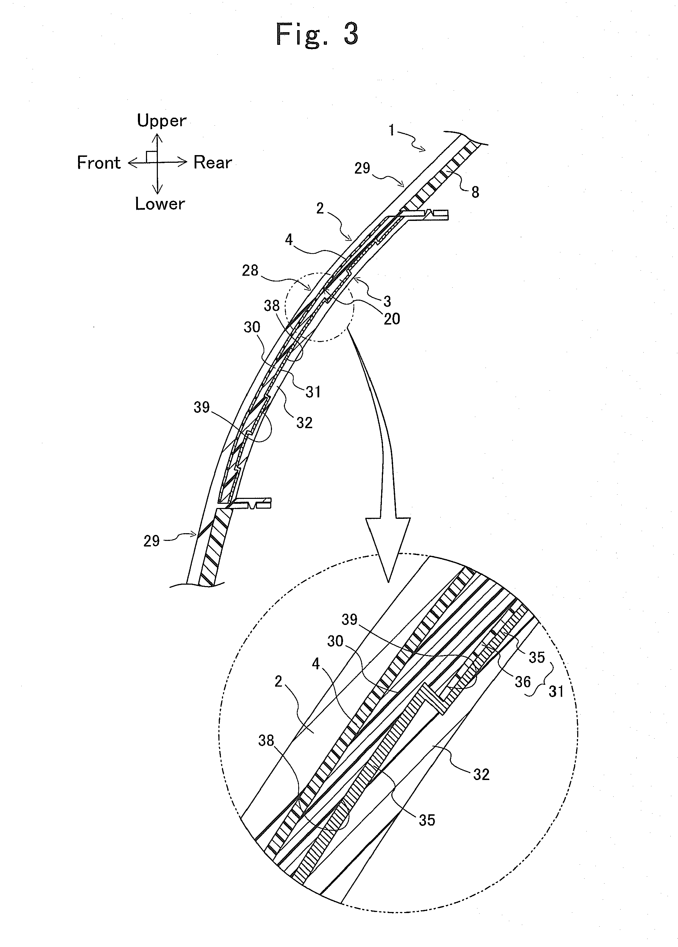

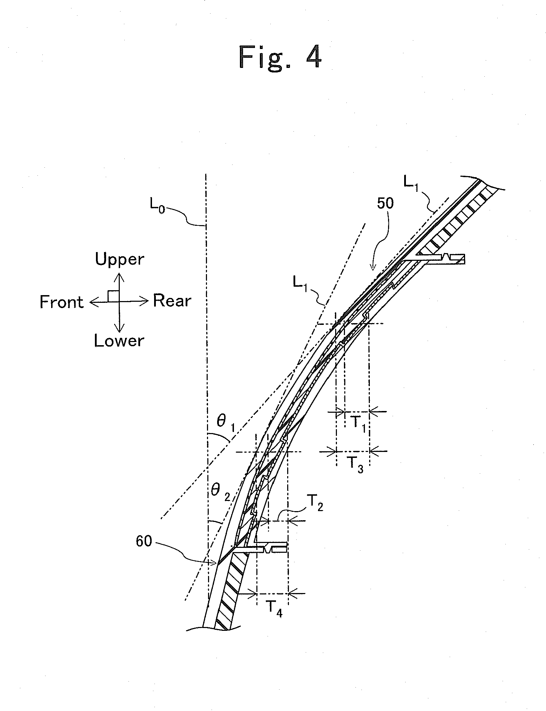

The vehicular exterior member of an embodiment is a front grille for a vehicle and includes a millimeter wave transmission cover as the designed body. FIG. 1 is a perspective view schematically illustrating the vehicle in which the vehicular exterior member of the embodiment is disposed. FIG. 2 is a front view schematically illustrating the vehicular exterior member of the embodiment. FIG. 3 is a cross-sectional view schematically illustrating a state in which the vehicular exterior member of the embodiment is cut in the thickness direction and the vertical direction. FIG. 4 is an explanatory view illustrating a "crossing angle" in the vehicular exterior member of the embodiment. Hereinafter, in this embodiment, upper, lower, left, right, front, and rear represent upper, lower, left, right, front, and rear illustrated in FIGS. 1 to 3. Hereinafter, the vertical direction in this embodiment represents the upper/lower direction (in other words, vertical direction) illustrated in FIGS. 1 to 4. In addition, the rear surface side represents the rear side in FIG. 1, and the surface side represents the front side in FIG. 1. Furthermore, the front side represents the forward side in a vehicle traveling direction, and the rear side represents the backward side in the vehicle traveling direction.

As illustrated in FIG. 1, a vehicular exterior member of the embodiment includes an exterior body 2 and a designed body 3. In addition, as illustrated in FIG. 3, the vehicular exterior member 1 of the embodiment further includes a general decorative portion 8. The exterior body 2 composes the base body in the front grille of a vehicle 100. The designed body 3 composes an emblem and is fixed to the upper portion of the exterior body 2.

The exterior body 2 is made of PMMA which is a type of transparent resin. As illustrated in FIG. 3, a concave portion 20 is provided in the upper portion of the rear surface side of the exterior body 2. The concave portion 20 has a depressed shape which is substantially complementary to the shape of the designed body 3. An area in the exterior body 2 where the concave portion 20 is provided is referred to as a display portion 28, and the other area therein is referred to as a general portion 29. The thickness of the display portion 28 is smaller than that of the general portion 29 by the depth of the concave portion 20. As illustrated in FIG. 2, the general portion 29 has a net shape with a large number of through-holes 29a. In addition, the general decorative portion 8 which is formed by coating is integrated into the rear surface side of the general portion 29. As a method of forming the general decorative portion 8, in addition to coating, various methods such as vapor deposition, plating, and two-color molding may be selected. However, since the front grille is a relatively large member, coating may be selected in consideration of the ease of formation of the general decorative portion 8. In a case where the general decorative portion 8 is thin (for example, in a case where the general decorative portion 8 is formed through vapor deposition method) and/or in a case where the general decorative portion 8 contains metal, the rear surface side of the general decorative portion 8 may be covered with a reinforcing layer in order to prevent corrosion and the like. The reinforcing layer may be formed by a general method such as coating. The paint may be colored, and various colors such as black, metallic color, and mirror coating may be exemplified.

Since the general decorative portion 8 exhibits a metallic color and the general portion 29 is transparent, when the general portion 29 is viewed from the front, a design with the metallic color of the general decorative portion 8 is recognized through the general portion 29. In addition, since the general portion 29 is made of the transparent resin material, a distinctive design in which a metallic material is disposed on the inside of the transparent layer is displayed on the general portion 29. In addition, in the vehicular exterior member 1 of the embodiment, the general decorative portion 8 is integrated into only the rear surface side of the general portion 29 but may also be further integrated into the rear surface side of the concave portion 20 (specifically, the further rear surface side of the designed body 3 which will be described later) depending on the cases. Furthermore, in the vehicular exterior member 1 of the embodiment, the general decorative portion 8 is integrated into the exterior body 2. However, the general decorative portion 8 may not be provided in the vehicular exterior member 1 of the present invention.

As illustrated in FIG. 3, the designed body 3 includes a transparent layer 30, a decorative layer 31, and a liner layer 32. The transparent layer 30 is made of polycarbonate which is a type of transparent resin. The rear surface of the transparent layer 30 is an uneven surface. A part of the uneven surface which is recessed when viewed from the rear surface side of the transparent layer 30 is referred to as a designed concave surface 38 and a part thereof which protrudes is referred to as a designed convex surface 39. The decorative layer 31 includes a bright layer 35 made of indium and a colored layer 36 made of a colored paint. The colored layer 36 is formed by a coating method and is formed on the designed convex surface 39 of the transparent layer 30. The bright layer 35 is formed through a vapor deposition method and is formed on the designed concave surface 38 and the rear surfaces of the colored layer 36 of the transparent layer 30. In other words, the bright layer 35 is deposited on the entire rear surface side of the transparent layer 30 which has the colored layer 36. The liner layer 32 is made of an AES resin and is formed integrally with the rear surface side of the bright layer 35. Note that the relative permittivity of the AES resin is substantially the same as that of polycarbonate. Further, the dielectric loss tangent of the AES resin is 0.007, and the dielectric loss tangent of polycarbonate is 0.006. These values are sufficiently low values, and thus the designed body 3 in the vehicular exterior member 1 of the embodiment can be used as a radio wave (more specifically, millimeter wave) transmission cover.

The thickness of the designed body 3 is substantially constant. Specifically, the thickness of the designed body 3 is in a range of 8.4 mm ± 0.3 mm.

The designed body 3 is disposed inside the concave portion 20 while the transparent layer 30 faces the front direction. In other words, the designed body 3 is disposed inside the concave portion 20 while the transparent layer 30 faces the rear surface of the concave portion 20 in the exterior body 2. The designed body 3 and the exterior body 2 are integrated into each other by the transparent adhesive material. Therefore, an adhesive layer 4 is interposed between the designed body 3 and the exterior body 2. In the vehicular exterior member 1 of the embodiment, PMMA is used as the transparent adhesive material. The adhesive layer 4 comes into contact with the bottom surface (that is, the rear surface) and the side surface of the concave portion 20 and comes into contact with the front surface (that is, the front surface of the transparent layer 30) and the entire side surface of the designed body 3. Therefore, the designed body 3 is firmly integrated into the exterior body 2.

However, as illustrated in FIG. 1, in the vehicle 100 to which the vehicular exterior member 1 of the embodiment is attached, a part where the vehicular exterior member 1 is attached has two areas having different inclination angles. The area having a larger inclination angle is an area A to which the upper portion of the vehicular exterior member 1 is attached. The area having a smaller inclination angle is an area B to which the lower portion of the vehicular exterior member 1 is attached. Since the vehicular exterior member 1 of the embodiment is a member which is attached to the two areas (the areas A and B), in order to cope with the two areas, the vehicular exterior member 1 has two areas (a first area 50 and a second area 60) having different inclination angles.

Specifically, the vehicular exterior member 1 has the two areas (the first area 50 and the second area 60) arranged in the upper/lower direction (FIG. 4). The first area 50 composes the upper part of the vehicular exterior member 1 in the vertical direction. The second area 60 composes the lower part of the vehicular exterior member 1 in the vertical direction. The first area 50 is located on the upper side in relation to the second area 60. Further, in the state where the vehicular exterior member 1 is attached to the vehicle 100, an inclination angle θ1 of the first area 50 is about 45°, and an inclination angle θ2 of the second area 60 is about 15°. In addition, the inclination angles (θ1 and θ2) of the vehicular exterior member 1 mentioned here indicate angles (minor angles) between a tangent line L1 and a vertical line L0 illustrated in FIG. 4. As illustrated in FIG. 4, the tangent line L1 is a tangent line drawn on a cross-section of the vehicular exterior member 1 cut in the vertical direction and the thickness direction. In the first area 50, the inclination angle θ1 is equal to or greater than 30° and equal to or smaller than 90°. In the second area 60, the inclination angle θ2 is equal to or greater than 0° and smaller than 30°. In other words, the first area 50 in the vehicular exterior member 1 of the embodiment is an area which is located on the upper side in the vertical direction as described above and is an area in which the crossing angle with respect to the vertical direction when the vehicular exterior member 1 is attached to the vehicle 100 is equal to or greater than 30° and equal to or smaller than 90°. In addition, the second area 60 is an area which is located on the lower side in the vertical direction and is an area in which the crossing angle with respect to the vertical direction when the vehicular exterior member 1 is attached to the vehicle 100 is equal to or greater than 0° and smaller than 30°. The concave portion 20 is provided over a portion of the first area 50 and a portion of the second area 60. In the vehicular exterior member of the present invention, the inclination angles of the first and second areas 50 and 60 are not limited thereto. In addition, the first and second areas 50 and 60 do not necessarily need to be adjacent to each other.

However, in the case where the designed body 3 is used as the radio wave transmission cover as in the vehicular exterior member 1 of the embodiment, a radio wave radar (not illustrated) is disposed in the rear of the designed body 3 in the vehicular exterior member 1. In this case, when the thickness of the vehicular exterior member 1 in a radio wave outgoing path and the thickness of the vehicular exterior member 1 in a radio wave incoming path are not substantially equal to each other, there is a possibility that the performance of the radio wave radar may be damaged. In addition, in the vehicular exterior member 1 including the two areas (the first and second areas 50 and 60) having different inclination angles as described above, as the difference between the inclination angles of the two areas is increased, the difference in the thickness of the vehicular exterior member 1 in the horizontal direction is increased. Specifically, as illustrated in FIG. 4, in the vehicular exterior member of the embodiment, although the thickness of the designed body 3 is substantially constant, a thickness T1 of the designed body 3 in the first area 50 in the horizontal direction is greater than a thickness T2 of the designed body 3 in the second area 60 in the horizontal direction. Therefore, as the outgoing path and the incoming path become close to the horizontal direction, the difference between the lengths of the outgoing path and the incoming path increases, which may lead to a difficulty in accurately measuring the distance from an object (for example, a vehicle or the like in front).

In the vehicular exterior member 1 of the embodiment, in order to compensate for the thickness difference, the thickness of the display portion 28 in the exterior body 2 is adjusted. That is, the thickness of the display portion 28 in the second area 60 is greater than that of the first area 50. In this case, the thickness of the first area 50 in the horizontal direction and the thickness of the second area 60 in the horizontal direction are substantially the same. Therefore, even in the case where the outgoing path and the incoming path are close to the horizontal direction, the lengths of the outgoing path and the incoming path are substantially the same.

Furthermore, since the thickness difference of the designed body 3 is absorbed by adjusting the thickness of the display portion 28, the same designed body 3 can be used for various types of exterior bodies 2 having different shapes and thicknesses. In other words, the same designed body 3 can be shared by various types of exterior bodies 2. Therefore, the vehicular exterior member 1 of the embodiment can be manufactured at low cost.

In the vehicular exterior member of the embodiment, the decorative layer 31 is provided in the designed body 3 which is smaller than the exterior body 2 in size. Therefore, the vehicular exterior member 1 of the embodiment has excellent productivity.

Furthermore, according to the vehicular exterior member 1 of the embodiment, since the designed body 3 is integrated into the rear side of the exterior body 2, the decorative layer 31 is less likely to be exposed to the outside compared to a case where the designed body 3 is exposed to the surface side of the exterior body 2. Therefore, for example, infiltration of rainwater, dust, and the like into the decorative layer 31 can be suppressed, thereby enhancing the durability of the decorative layer 31 and thus enhancing the durability of the vehicular exterior member 1.

By enhancing the durability of the decorative layer 31, the vehicular exterior member 1 of the embodiment can maintain its excellent designability over a long period of time. Moreover, since the surface of the decorative layer 31 is covered with the transparent layer 30 and is further covered with the exterior body 2, the durability of the decorative layer 31 is further enhanced.

In addition, the sum of the thickness of the display portion 28 in the exterior body 2, the thickness of the transparent layer 30 in the decorative layer 31, and the thickness of the adhesive layer 4, that is, the thickness of the transparent layer provided on the front surface side of the decorative layer 31 in the vehicular exterior member 1 is 5 mm in the thinnest part in the embodiment. As described above, by displaying the design through the thick and transparent layer, the vehicular exterior member 1 of the embodiment can display the design having a high-class sense. The sum of the thickness of the display portion 28, the thickness of the transparent layer 30, and the thickness of the adhesive layer 4 may be equal to or greater than 5 mm. In addition, by allowing the sum of the thicknesses thereof to be smaller than that of the general portion 29, the designed body 3 looks as if it protrudes, and thus a design which emphasizes the designed body 3 can be expressed.

### (Industrial Applicability)

The vehicular exterior member of the present invention can be applied to various types of exterior members for a vehicle including a designed body. For example, the vehicular exterior member can be particularly used as a vehicular front grille into which a radio wave transmission cover is integrated, a garnish, and the like.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicular exterior member comprising:
an exterior body which is made of a transparent resin material; and
a designed body which is smaller than the exterior body in size and is integrated into the exterior body,
wherein the exterior body includes a display portion so that the designed body is fixed to a rear surface side of the display portion,
a concave portion is provided on the rear surface side of the display portion,
the designed body includes a transparent layer made of a transparent resin material and a decorative layer provided on a rear surface side of the transparent layer,
the designed body is disposed inside the concave portion while the transparent layer faces the exterior body side, and
an adhesive layer made of a transparent adhesive material is interposed between the transparent layer of the designed body and the exterior body.

2. The vehicular exterior member according to claim 1, wherein the designed body has a constant thickness.

3. The vehicular exterior member according to claim 2, further comprising a first area and a second area, wherein:
a crossing angle with respect to a vertical direction when the vehicular exterior member is attached to a vehicle is greater in the first area than in the second area;
the display portion is provided over a portion of the first area and a portion of the second area; and
a thickness of the display portion is greater in the second area than in the first area.

4. The vehicular exterior member according to any one of claims 1 to 3, wherein:
the designed body is a millimeter wave transmission cover which is disposed in a front of a millimeter wave radar device for a vehicle; and
relative permittivities of the transparent resin material forming the exterior body, the transparent resin material forming the transparent layer of the designed body, and the adhesive layer are 2.7 ± 1.5 at 76.5 GHz at room temperature.

5. The vehicular exterior member according to claim 3 or 4, wherein the crossing angle with respect to the vertical direction when the vehicular exterior member is attached to the vehicle is equal to or greater than 30° and equal to or smaller than 90° in the first area and is equal to or greater than 0° and smaller than 30° in the second area.
